# EUROPÄISCHE PATENTANMELDUNG

(11) **EP 0 955 204 A2**
(43) Veröffentlichungstag der Anmeldung: **10.11.1999**
(21) Anmeldenummer: 99107706.6
(22) Anmeldetag: 17.04.1999
(51) Int. Cl.: B60N 2/46

(54) **Armlehne für einen Kraftfahrzeugsitz**

(30) Priorität: 07.05.1998 DE 19820336
(71) Anmelder: DaimlerChrysler AG, 70567 Stuttgart (DE)
(72) Erfinder: Heckmann, Thomas, 71134 Aidlingen (DE); Hörner, Holger, 71034 Böblingen (DE); Krischen, Frank, 75382 Althengstett (DE); Wobst, Christian, 72160 Horb (DE)

(57) **Zusammenfassung**

Die Erfindung bezieht sich auf eine Armlehne für einen Kraftfahrzeugsitz, die mittels einer Lagereinrichtung befestigbar und um eine Schwenkachse zwischen zwei den Schwenkbereich begrenzenden Raststellen der Lagereinrichtung schwenkbar ist, denen ein mit der Armlehne bewegter Anschlag zugeordnet ist. Die Lagereinrichtung weist zwei zusammengesetzte Teil und ein die Schwenkbewegung der Armlehne bremsendes sowie die Endstellungen der Armlehne verrastendes federndes Gleitstück auf. Das federnde Gleitstück ist in den einen Teil der Lagereinrichtung als damit einstückig integriert, wobei dieser eine Teil aus einem einstückigen Kunststofformteil besteht.

## Beschreibung

Die Erfindung betrifft eine Armlehne für einen Kraftfahrzeugsitz gemäß dem Oberbegriff des Patentanspruchs 1.

Bei einer bekannten Armlehne dieser Art (DE 40 35 856 C2) weist die Lagereinrichtung ein aus zwei zusammenpassenden, vorzugsweise aus Blech hergestellten Teilen bestehendes Lagergehäuse auf, in dem ein bei Auftreten einer vorbestimmten Fahrzeugverzögerung auslenkbarer Sperrhebel und ferner ein federndes Gleitstück gelagert und enthalten sind, das während der Schwenkbewegung der Armlehne bremst und die Endstellungen der Armlehne verrastet. Das Gleitstück besteht aus einem eigenständigen Kunststofformteil, welches in das zweiteilige Lagergehäuse paßgenau eingesetzt ist.

Der Erfindung liegt die Aufgabe zugrunde, eine Armlehne der eingangs genannten Art zu schaffen, bei der die Lagereinrichtung unter Reduzierung der Bauteile und Erleichterung der Montage vereinfacht ist.

Die Aufgabe ist bei einer Armlehne der eingangs genannten Art gemäß der Erfindung durch die Merkmale im Patentanspruch 1 gelöst. Dadurch, daß das federnde Gleitstück einstückiger Bestandteil des einen Teils der Lagereinrichtung ist, ist diese Lagereinrichtung auf lediglich zwei etwa plattenförmige Teile reduziert. Die Anzahl der Bauteile ist somit verringert. Der Herstellungsaufwand für den einen, das damit einstückige Gleitstück aufweisenden Teil läßt sich vor allem bei der Gestaltung als Kunststofformteil noch weiter reduzieren. Beide Teile lassen sich schnell und einfach zu einer Einheit verbinden. Die Montage der Lagereinrichtung ist vereinfacht.

Weitere vorteilhafte Ausgestaltungen der Erfindung ergeben sich aus den Ansprüchen 2 bis 13.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: eine schematische Seitenansicht einer Armlehne mit Lagereinrichtung, wobei die Armlehne herabgeklappt ist und gestrichelt deren hochgeklappte Position angedeutet ist,
- Fig. 2: eine Seitenansicht eines Teils der Lagereinrichtung bei abgenommenem zweiten Teil dieser,

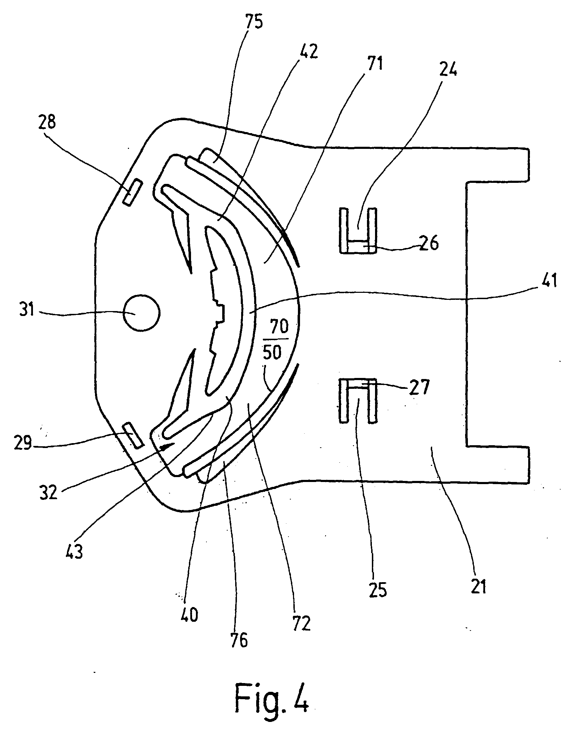

- Fig. 3: eine Seitenansicht der Innenseite des anderen Teils der Lagereinrichtung,
- Fig. 4: eine Seitenansicht der Außenseite des anderen Teils der Lagereinrichtung.

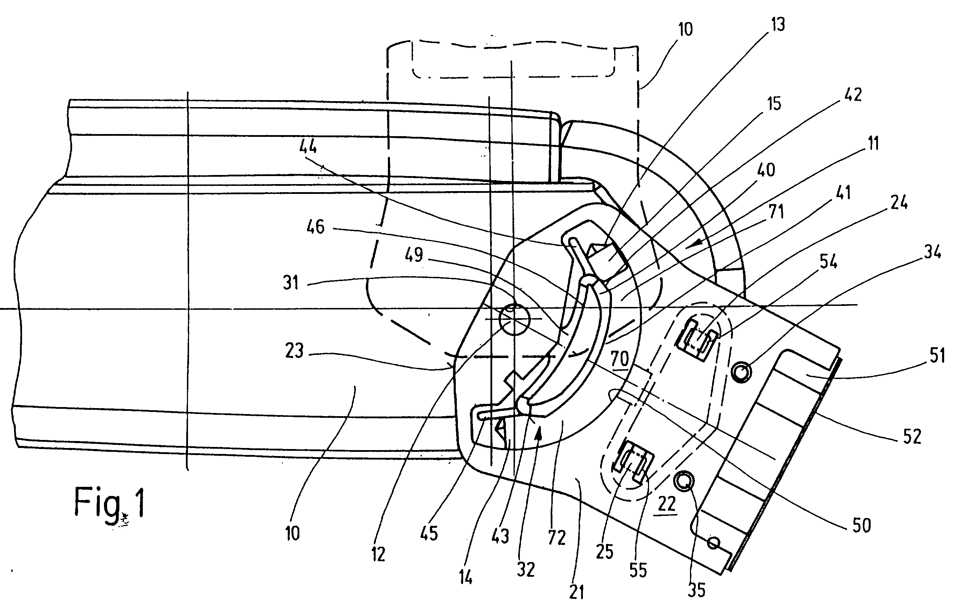

In Fig. 1 ist schematisch eine Armlehne 10 für einen Kraftfahrzeugsitz, z.B. für einen Fondsitz, gezeigt, die auf beiden Seiten mittels identisch gestalteter Lagereinrichtungen 11 an einer nicht gezeigten Rückenlehne oder an einem eigenen Rahmen od.dergl. mittels Schrauben befestigbar ist. Die Armlehne 10 ist um eine Schwenkachse 12 zwischen zwei den Schwenkbereich begrenzenden Raststellen 13, 14 der Lagereinrichtung 11 schwenkbar. Den in der Lagereinrichtung 11 enthaltenen Raststellen 13,14 ist ein mit der Armlehne 10 bewegter Anschlag 15 zugeordnet, der z.B. aus einem Bolzen bestehen kann.

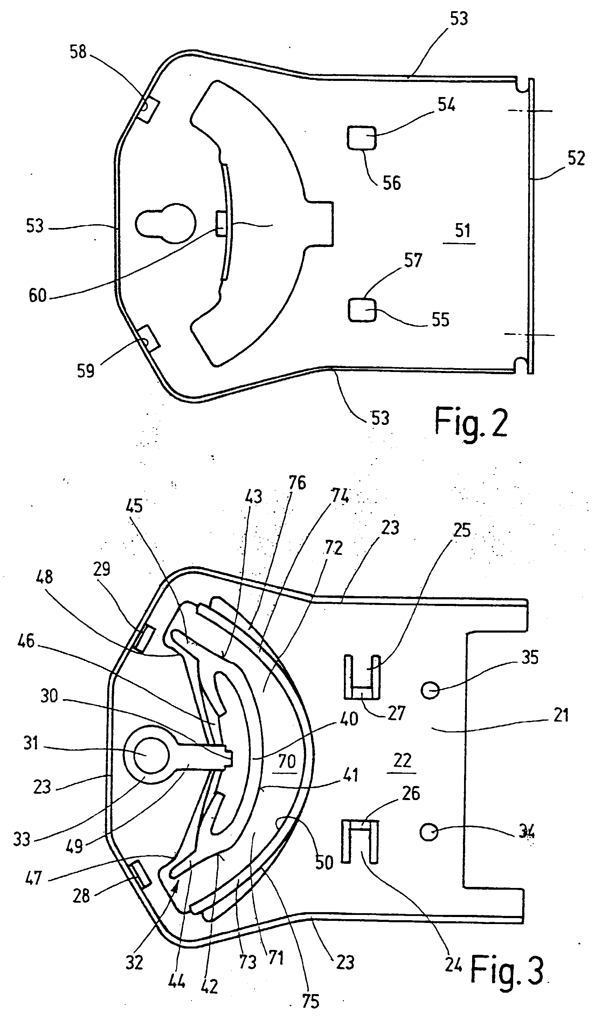

Die Lagereinrichtung 11 weist zwei zusammenpassende und in Funktionsstellung zusammengesetzte Teile 21 und 51 auf, von denen der erste Teil 21 auf der der Armlehne 10 abgewandten Seite und der zweite Teil 51 auf der der Armlehne 10 zugewandten Seite angeofdnet ist. Die Lagereinrichtung 11 weist ferner ein während der Schwenkbewegung der Armlehne 10 bremsendes sowie die Endstellungen der Armlehne 10 verrastendes federndes Gleitstück 32 auf. Das Gleitstück 32 ist in den einen Teil 21 der Lagereinrichtung 11 als damit einstückig integriert. Dieser eine Teil 21 besteht aus einem einstückigen Kunststoffteil und ist als Platte 22 ausgebildet. Der andere Teil 51 hingegen ist als im wesentlichen flaches Blechteil ausgebildet und am in Fig. 2 rechten Rand mit einem etwa rechtwinklig abgebogenen Flansch 22 versehen, der zur fahrzeugseitigen Befestigung der Lagereinrichtung 11 dient.

Beide Teile 21 und 51 weisen ineinander passende randseitige Stege z.B. in Form umlaufender abstehender Ränder 23 bzw. 53 auf, die beim Zusammensetzen der beiden Teile 21, 51 unter Abstützung dieser ineinandergreifen. Beim gezeigten Ausführungsbeispiel sind die Abmessungen des ersten Teiles 21 so gewählt, daß dessen Rand 23 den Rand 53 des zweiten Teils 51 außen übergreift.

Beide Teile 21,51 sind durch formschlüssig ineinandergreifende Befestigungsglieder zusammengehalten, wobei diese Befestigungsglieder generell durch in Ausnehmungen eingreifende Vorsprünge, Zungen, Klipse od.dergl. gebildet sein können. Beim gezeigten Ausführungsbeispiel weist der erste Teil 21 z.B. zwei Federzungen 24,25 mit Rasthaken 26 bzw. 27 auf, die zugeordnete fensterartige Öffnungen 54,55 des zweiten Teils 51 durchgreifen und mit den Rasthaken 26,27 zugeordnete Ränder 56 bzw. 57 formschlüssig untergreifen können. Ferner sind etwa nasenförmige Vorsprünge 28,29 am Rand 23 vorgesehen, die in zugeordnete Öffnungen 58 bzw. 59 eingreifen können, die bis in den Rand 53 hineinreichen, so daß im zusammengebauten Zustand beider Teile 21, 51 die Vorsprünge 28,29 im Bereich der Öffnungen 58 bz. 59 den Rand 53 formschlüssig untergreifen. Der erste Teil 21 weist ferner einen zungenartigen Vorsprung 30 auf, der in eine zugeordnete Öffnung 60 des Teils 51 einfahren und den dortigen hochgebogenen Rand 61 formschlüssig untergreifen kann. Die Federzungen 24,25, ferner die Vorsprünge 28,29 und der Vorsprung 30 sind alle am ersten Teil 21, also Kunststofformteil, vorgesehen und dort bei dessen Herstellung gleich mitgeformt. Dieser Teil weist ferner im Bereich der Schwenkachse 12 eine Bohrung 31 mit Nabe 33 auf. Die Nabe 33 kann beim Zusammenfügen beider Teile 21,51 als den Abstand vorgebendes Distanzstück dienen. Der erste Teil 21 weist ferner in Abstand neben den Federzungen 24,25 abstehende Vorsprünge 34,35 auf, die ebenfalls als Distanzstücke dienen können.

Der eine das damit einstückige Gleitstück 32 aufweisende Teil 21 trägt ferner einen etwa bogenförmig verlaufenden Abstützteil 40, der auf seiner der Bohrung 31 abgewandten Außenseite eine Laufbahn 41 für den beim Schwenken der Armlehne 10 darauf ablaufenden Anschlag 15 bildet. Diese Laufbahn 41 ist im Bereich beider Enden 42,43 abfallend ausgebildet. Der etwa bogenförmige Abstützteil 40 weist im Bereich beider abfallender Enden 42,43 frei abstehende Zungen 44, 45 auf, die federnd sein können. Etwa auf dem Abschnitt der von der Außenfläche gebildeten Laufbahn 41, der sich zwischen den Zungen 44,45 erstreckt, ist der Abstützteil 40 mittels eines Bogenabschnitts 46 verstärkt, der in Abstand von der Laufbahn 41 verläuft. Der gesamte etwa bogenförmige Abstützteil 40 ist zur einen oder zur anderen Bogenseite hin einfederbar. Bei der Darstellung in Fig. 1 drückt der Anschlag 15 gegen die obere Zunge 44, die etwa federelastisch einfedert. In der anderen Schwenkstellung der Armlehne 10 wird in analoger Weise die andere Zunge 45 unter Verrastung dieser Endstellung beaufschlagt, so daß diese dann einfedert. Zur Abstützung der federbaren Zungen 44,45 sind am Teil 21 Anschläge 47,48 vorgesehen, an denen die Zungen 44,45 unter Begrenzung des Federweges anschlagen. Der Abstützteil 40 ist über einen den Vorsprung 30 und die Nabe 33 tragenden stabilen Mittelsteg 49 gehalten.

Der erste Teil 21 weist eine in Abstand von der Laufbahn 41 verlaufende etwa bogenförmige Führungsbahn 50 auf, wobei zwischen der Laufbahn 41 und der Führungsbahn 50 eine etwa bogenförmig verlaufende, schlitzartige Kulisse 70 für den armlehnenfesten Anschlag 15 gebildet ist. Die Breite dieser Kulisse 70 nimmt zu jeder Bogenseite hin ab unter Bildung jeweiliger Nutverengungen 71 bzw. 72. Diese Verjüngungen in Form der Nutverengungen 71,72 führen dazu, daß die Armlehne 10 beim Schwenken in die eine bzw. in die andere Endstellung zusätzlich federnd abgebremst wird, bevor die Armlehne 10 die jeweilige Endstellung erreicht. Die etwa bogenförmig verlaufende Führungsbahn 50 ist auf jeder Bogenseite zumindest zum Teil von federnden Stegen 73 bzw. 74 gebildet, die jeweils durch etwa schlitzförmige Materialaussparungen 75 bzw. 76 gebildet sind.

Die auf beiden Seiten der Armlehne 10 zu deren Lagerung vorgesehene Lagereinrichtung 11 ist einfach, kostengünstig und leicht montierbar. Sie besteht lediglich aus dem ersten Teil 21 in Form eines Kunststofformteiles, an dem alle Funktionselemente einstückig angeformt sind, und aus dem zweiten Teil 51 in Form eines Blechformteiles, das über den Flansch 52 zugleich zur Befestigung der Lagereinrichtung 11 eingerichtet ist.

## Patentansprüche

1. Armlehne für einen Kraftfahrzeugsitz, die mittels einer Lagereinrichtung (11) befestigbar und um eine Schwenkachse (12) zwischen zwei den Schwenkbereich begrenzenden Raststellen (13,14) der Lagereinrichtung (11) schwenkbar ist, denen ein mit der Armlehne (10) bewegter Anschlag (15) zugeordnet ist, wobei die Lagereinrichtung (11) zwei zusammengesetzte Teile (21,51) und ein die Schwenkbewegung der Armlehne (10) bremsendes sowie die Endstellungen der Armlehne (10) verrastendes federndes Gleitstück (32) aufweist,
**dadurch gekennzeichnet**,
daß das fendernde Gleitstück (32) in den einen Teil (21) der Lagereinrichtung (11) als mit diesem Teil einstückig integriert ist.

2. Armlehne nach Anspruch 2,
**dadurch gekennzeichnet**,
daß der eine das damit einstückige federnde Gleitstück (32) aufweisende Teil (21) aus Kunststoff gebildet ist.

3. Armlehne nach Anspruch 1 oder 2,
**dadurch gekennzeichnet**,
daß der eine das damit einstückige federnde Gleitstück (32) aufweisende Teil (21) als Platte ausgebildet ist und daß der zweite Teil (51) als flaches Blechteil und zur fahrzeugseitigen Befestigung ausgebildet ist.

4. Armlehne nach einem der Ansprüche 1 bis 3,
**dadurch gekennzeichnet**,
daß beide Teile (21,51) der Lagereinrichtung (11) ineinanderpassende randseitige Stege, z.B. umlaufende abstehende Ränder (23,53), aufweisen, die beim Zusammensetzen der beiden Teile (21,51) abstützend ineinandergreifen.

5. Armlehne nach einem der Ansprüche 1 bis 4,
**dadurch gekennzeichnet**,
daß beide Teile (21,51) durch formschlüssig ineinandergreifende Befestigungsglieder (Federzungen 24,25 , Vorsprünge 28 bis 30 , Öffnungen 54,55,58 bis 60), insbesondere durch in Ausnehmungen eingreifende Vorsprünge, Zungen, Klipse od.dergl., zusammengehalten sind.

6. Armlehne nach Anspruch 5,
**dadurch gekennzeichnet**,
daß die Vorsprünge (28 bis 30), Zungen (Federzungen 24, 25), Klipse od.dergl. Bestandteile des einen das damit einstückige Gleitstück (32) aufweisenden Teils (21) sind.

7. Armlehne nach einem der Ansprüche 1 bis 6,
**dadurch gekennzeichnet**,
daß der eine das damit einstückige Gleitstück (32) aufweisende Teil (21) einen etwa bogenförmig verlaufenden Abstützteil (40), der auf seiner dem armlehnenfesten Anschlag (15) zugewandten Außenfläche eine Laufbahn (41) bildet, und in Abstand von der Laufbahn (41) eine etwa bogenförmig verlaufende Führungsbahn (50) aufweist und daß zwischen der Laufbahn (41) und der Führungsbahn (50) eine etwa bogenförmig verlaufende, schlitzartige Kulisse (70) für den armlehnenfesten Anschlag (15) gebildet ist.

8. Armlehne nach Anspruch 7,
**dadurch gekennzeichnet**,
daß die Laufbahn (41) im Bereich beider Enden (42,43) abfallend ausgebildet ist.

9. Armlehne nach Anspruch 8,
**dadurch gekennzeichnet**,
daß der etwa bogenförmige Abstützteil (40) im Bereich beider abfallender Enden (42,43) frei abstehende Zungen (44,45) aufweist.

10. Armlehne nach einem der Ansprüche 7 bis 9,
**dadurch gekennzeichnet**,
daß der etwa bogenförmig verlaufende Abstützteil (40) zur einen und zur anderen Bogenseite einfederbar ist.

11. Armlehne nach einem der Ansprüche 7 bis 10,
**dadurch gekennzeichnet**,
daß die Breite der etwa bogenförmig verlaufenden, schlitzartigen Kulisse (70) zu jeder Bogenseite hin abnimmt unter Bildung jeweiliger Nutverengungen (71,72).

12. Armlehne nach einem der Ansprüche 7 bis 11,
**dadurch gekennzeichnet**,
daß die etwa bogenförmig verlaufende Führungsbahn (50) auf jeder Bogenseite zumindest zum Teil von federnden Stegen (73,74) gebildet ist.

13. Armlehne nach Anspruch 12,
**dadurch gekennzeichnet**,
daß jeder federnde Steg (73,74) durch etwa schlitzförmige Materialaussparungen (75,76) gebildet ist.
